# EUROPEAN PATENT SPECIFICATION

(11) **EP 1 437 053 B1**
(45) Date of publication and mention of the grant of the patent: **06.09.2006**
(21) Application number: 02765446.6
(22) Date of filing: 06.09.2002
(51) Int. Cl.: A23L 1/325

(54) **GROUND FISH MEAT PRODUCTS STARTING WITH PROTEASE-CONTAINING FISH MEAT**
FISCHFLEISCHMEHLPRODUKTE AUF BASIS VON PROTEASE-HALTIGEM FISCHFLEISCH
PRODUITS A BASE DE CHAIR DE POISSON DE FOND OBTENUS A PARTIR DE CHAIR DE POISSON CONTENANT UNE PROTEASE

(30) Priority: 10.09.2001 JP 2001274221
(43) Date of publication of application: 14.07.2004
(73) Proprietor: NIPPON SUISAN KAISHA, LTD., Tokyo 100-8686 (JP)
(72) Inventor: KIMURA, Ikuo, C/O Nippon Suisan Kaisha, Ltd.,, Hachioji-Shi, Tokyo 192-0906 (JP); MORI, Takashi, C/O Nippon Suisan Kaisha, Ltd.,, Hachioji-Shi, Tokyo 192-0906 (JP)
(74) Representative: TBK-Patent
(86) International application number: PCT/JP2002/009095
(87) International publication number: WO 2003/022076

(56) References cited:
- WO-A-96/19120
- JP-A- 2 100 655
- JP-A- 10 014 542
- JP-A- 57 008 761
- US-A- 4 207 354
- US-A- 4 284 653
- US-A- 5 676 986

## Description

### Technical Field

The present invention relates to a protease inhibitor-free fish paste product derived from parasite-infected fish meat that is impossible to use for fish paste products unless treated with a protease inhibitor due to proteases originating from the parasite.

### Background Art

Although it was previously difficult to use Pacific whiting (abbreviated as PW hereinafter) for fish paste products due to proteases originating from parasitic sporozoans in the fish, it has became possible to use such fish meat for fish paste products thanks to technical developments using protease inhibitors (Japanese Examined Patent Application Publication Nos. 55-42825, 61-33546, 61-42552 and 4-45148). In fact, protease inhibitor-containing fish paste is used as normal fish paste. While the protease inhibitor-free fish paste of PW is commonly available on the market in the United States, the commercial value of such a product is low due to the problem of the protease, even when fresh fish meat is used as the starting material. A potato protease inhibitor having an weak protease inhibitory activity is used for producing a fish paste product.

Patent applications of various methods for producing fibrous food materials by forming fish meat into filaments using a protein denaturant followed by coagulation by heating have been filed by the inventors of the present invention, and the techniques have been used in practice (Japanese Patent Nos. 1304676, 1273652, 1660397 and 1229058). Surimi (ground and water-washed fish meat) is used as the material of these products. The protease inhibitor-containing surimi of PW has also been used as one type of common surimi.

Pacific whiting (PW) as a representative sporozoan-infected fish is thought to spawn off the coast of California, swim around a wide area up to the coast of Canada foraging for food, and return again to the coast offshore of California.

A major problem in using PW is that almost all the fish are infected with Myxozoa (a class of sporozoan). The protease activity is very high in the muscle due to Myxozoa infection. Consequently, the fish meat takes on a mussy texture due to a loss of fibrous properties during a heating process such as a steam-heating, and the meat cannot be handled as food materials such as white fish fillets. The powerful protease cannot be eliminated even by surimi process (even when the fish meat is washed with water after grinding ), and the protease works strongly in the heating process after kneading with salt and molding in the production process of the fish paste product. Accordingly, commercial products having a normal gel property cannot be obtained.

The inventors of the present invention have found at an early stage of their research that the protease contained in the muscle of PW is a thiol protease, and have patented the use of thiol protease inhibitors. Examples of such thiol protease inhibitors include egg white, plasma and milk serum. While surimi has been produced using these inhibitors, the development of production methods that require the least use of an inhibitor has been desired since the inhibitor may act as an allergen.

The art for producing fibrous food materials using a protein denaturant is a unique technique developed by the applicant of the present invention for producing fibrous fish paste products. The basic constitutent elements thereof comprise (1) surimi kneaded with salt, (2) chemical coagulation by treating with salt or an acid solution, and (3) gelation by a heat treatment. In detail, the method comprises the steps of extruding the surimi after kneading with salt into a high concentration solution of salt or an acid to immediately coagulate the ground meat, and forming filaments in the flow direction of by allowing a coagulant solution to flow (coagulation and gelation at room temperature). The coagulant solution is drained thereafter, the formed noodle-like filaments is continuously steamed to form discrete gels, and the product is finished to a fibrous gel material of fish paste after washing with water and applying a neutralization treatment.

The gelled material of the fibrous fish paste is cut into lengths of 2 to 3 cm, short filaments of the fibrous fish paste are bonded with each other using the fish paste as an adhesive, and the product is molded and heated to produce food products having a texture and shape resembling to the meat of the shoulder and leg of a crab.

As a suitable coagulant solution, a salt solution includes more than 15% of salt by weight or a acid solution of pH 3.0 to 5.0 can be used. It is crucial to use good quality meat that can be soluted well by kneading with salt in order to produce a good quality product.

JP-A-2 100 655 discloses a ground fish meat which is obtained by leaching fish meat from e.g. protozoan contaminated fish and adding a transglutaminase derived from a microorganism.

JP-A-10 014 542 discloses a method for processing fish meat contaminated with sporozoans comprising the addition of a trans-epoxysuccinic acid derivative.

In JP-A-57 008 761 a method for the preparation of a muscular fibrous food product from animal meat is described, wherein the animal meat is mixed and kneaded with salt, while the resulting kneaded meat is extruded through a small nozzle into an aqueous solution of a proteinic denaturing agent.

US-A-4 284 653 discloses a method for handling and processing fish meat contaminated with sporozoa. This method comprises the addition of a thiol protease inhibitor, while one possible product is salted fish.

US-A-4 207 354 discloses the processing of a sporozoan-contaminated fish meat paste by mixing egg white with the fish meat.

WO96/19120 A discloses products derived from protease containing fish as well as methods for the inactivation of the protease. The protease is inactivated by mixing the fish meat with a starchy and/or proteinaceous material and extruding the mixture by a screw extruder having two barrel sections. Of these sections the first has a temperature below the activation temperature of the protease, while the second section has temperature inactivating the protease.

US-A-5 676 986 is directed to food products derived from protease containing fish muscle. In this method, the protease is distributed throughout the fish muscle and the meat is autolyzed. Subsequently, the product is dried and pulverized, and a starchy and/or proteinaceous material is added. Finally, the mixture is introduced into an extruder having an elevated temperature.

### Disclosure of Invention

The object of the present invention is to provide a fish paste product that can be produced without adding a protease inhibitor from fish meat infected with a parasite that could not be used for the fish paste products due to proteases originating from the parasite unless a protease inhibitor is used and a method for producing a protease inhibitor-free fish paste product. In particular, the object of the present invention is to provide a fish paste product by producing a fish paste product derived from protease inhibitor-free PW surimi having a limited range of use unless a protease inhibitor is added.

### Brief Description of the Drawings

Fig. 1 shows photographs of the product of the present invention produced in Example 1 and a comparative product.
Fig. 2 shows electrophoresis diagrams showing the activities of the protease in the product of the present invention produced in Examples 1 and in the comparative product.
Fig. 3 is a graph showing the physical property (shear stress) of the product of the present invention produced in Example 1 before steam treatment and after neutralization.
Fig. 4 is a graph showing the measured values of the shear stress of the product of the present invention depending on the difference in the nozzles used in Example 3.

### Best Mode for Carrying Out the Invention

The inventors of the present invention have succeeded in forming a gel without adding any inhibitors by taking advantage of a technology for producing fibrous fish paste products which is one of the surimi processing technologies.

The fish paste product of the present invention is defined according to claim 1, and the method for producing a fish paste product is defined according to claim 7. The fish meat is preferably used as surimi in the present invention, and is kneaded with salt.

Examples of the fish meat material is a fish meat having a high protease activity in the muscle due to parasites in the muscle, particularly parasitic sporozoans, and the fish meat material is more particularly PW and/or Merluccius gayi fish meat. The protease activity in the muscle is enhanced in the fish meat used in the present invention due to a parasite, particularly parasitic sporozoans. The object of the present invention is to provide a protease inhibitor-free fish paste product derived from fish meat materials having a high activity to an extent that renders the production of fish paste impossible unless a protease inhibitor is used, more particularly to PW and/or Merluccius gayi fish meat materials . The present invention particularly uses sporozoan-infected fish meat, namely PW and/or Merluccius gayi fish meat which is liable to be infected with the parasite.

The fish meat material is kneaded with salt, and the fish meat is denatured with a protein denaturant followed by coagulating the denatured fish meat by heating. The fish meat or surimi used in the present invention contains a protease having an activity to an extent that renders the production of fish paste impossible unless a protease inhibitor is used. Particularly, the fish meat contains a protease having an activity to an extent that renders the production of fish paste impossible unless a protease inhibitor is used due to a parasite, particularly parasitic sporozoans in the muscle. Such fish meat is particularly PW and/or Merluccius gayi fish meat. The present invention provides a protease inhibitor-free fish paste product derived from the fish meat as described above as a fish meat material by grinding the meat with salt, denaturing the salt-fish paste with a protein denaturant, and coagulating the denatured meat by heating. Available protein denaturants include organic acids, inorganic acids and/or a high concentration solution of salt.

The process for producing the fish paste product comprises the steps of kneading a fish meat material with salt, and extruding the salt-kneaded fish meat into a protein denaturant solution at a temperature not higher than the temperature for activating proteases. Particularly, the salt-kneaded fish meat is extruded into the protein denaturant solution through a nozzle having a pore diameter of 1 mm or less or a size with a thickness of 1 mm or less. The fish meat material is fish meat or surimi containing a protease to an extent that renders the production of fish paste products impossible unless a protease inhibitor is used. The fish meat material has a high protease activity in the muscle to an extent that renders the production of a fish paste product impossible unless a protease inhibitor is used due to a parasite, particularly sporozoans in the muscle. Examples of such fish meat are PW and/or Merluccius gayi fish meat . The process for producing the fish paste product derived from the fish meat material as described above comprises the steps of kneading the fish meat material with salt, extruding the salt-kneaded fish meat into a protein denaturant solution, for example into an organic acid solution, inorganic acid solution and/or a high concentration solution of salt at a temperature not higher than the protease activating temperature. Particularly, the process comprises the steps of extruding the salt-kneaded fish meat into the protein denaturant solution, for example into the organic acid solution, inorganic acid solution and/or high concentration solution of salt, at a low temperature through a nozzle having a pore diameter of 1 mm or less or a size with a thickness of 1 mm or less to form filaments, and coagulating the filaments by heating.

The protease contained in the PW surimi shows a maximum activity in the temperature range of 50 to 60°C. Accordingly, as it is observed during usual fish paste manufacturing, when the heating rate in the heating process is low and the temperature is raised slowly while passing through the temperature range where the activity of the enzyme is high, a satisfactory gel cannot be obtained without using an inhibitor.

However, it is possible to use fish meat for the fish paste product without adding any inhibitors by employing a heating method that is able to suppress the activity of the protease to as low as possible. The size of the product should be as small as possible and as thin as possible for this purpose, and the heating method should be selected so that the temperature at the center of the product is increased as quickly as possible.

A production technique for fibrous food materials using a protein denaturant is applied to the production of the PW surimi (without adding any inhibitors) in the present invention.

While the protease inhibitor has been added as a countermeasure to the protease in the PW surimi , it was impossible to produce a product without adding any inhibitors. Since fresh fish meat is used for the PW surimi, the protein (myofibril) in the surimi itself is solute well in the salt kneading process, and the fish meat is suitable as a material of the present invention.

The conditions for using the inhibitor-free PW surimi as the material of the present invention have been investigated, and the following results were obtained.

A fibrous gel is obtained by extruding the PW salt-kneaded surimi into a salt and/or an acid coagulant solution through fine pores. A gel is formed by a protein coagulation reaction of the salt-kneaded surimi with the salt or acid provided that the temperature is low enough to prevent the protease from being activated. The salt-kneaded fish meat is extruded through the fine pores into the salt and/or acid solution at room temperature or less, preferably at 20°C or less to form a fine fibrous coagulated material.

The protease activity in the coagulated filaments remains even after the process. Moreover, a pH of the coagulant solution of 3.0 to 5.0 is an optimum pH for activating the protease. Accordingly, the gel softens and collapses by maintaining the filaments of the PW salt-kneaded surimi at 60°C. It was confirmed by SDS-PAGE analysis of the protein that myosin as a principal component of the gel had been degraded. This means that the protease is not deactivated by treating with the coagulant solution, and the protease exhibits activity to an extent that largely affects physical properties of the meat by processing at a temperature around 60°C. Accordingly, the coagulated filaments should be rapidly heated. Preferably, the fine fibrous coagulated material should be rapidly heated to minimize the time duration to pass through the optimum temperature range for activating the protease (within 3 minutes, preferably within 1 minute before reaching a temperature of 80°C or more). The heating methods appropriately available include heating by boiling and steam heating as well as electric current heating and microwave heating.

Decomposition of myosin is not observed by SDS-PAGE analysis by rapidly heating with steam or in boiling water.

The shape of the filaments of the present invention is preferably cylinfrical with a diameter of 1 mm or less, or a plate-shaped with a width of about 2 mm and a thickness of about 1 mm, or a width of about 3 mm and a thickness of about 1 mm. Since the temperature is rapidly increased in the filaments having the size as described above, and the temperature passes through the optimum temperature range of the protease before the protease works, it is possible for the gel to be molded by heating.

A mixed aqueous solution of common salt and an acid is preferably used as the protein denaturant in the present invention. The concentration of the common salt is 15% by weight or more, and the acids available include an inorganic acid such as hydrochloric acid and phosphoric acid, and an organic acid such as acetic acid and citric acid. The acid is used in an amount capable of maintaining the pH of the aqueous solution in the range of 3.0 to 5.0. Other salts such as sodium acetate and sodium citrate may be added to the aqueous solution of common salt and an acid as buffering agents.

The acid is neutralized by washing with water, or by adding an alkali suitable for food use such as sodium hydrogen carbonate.

Various food additives may be added, if necessary, to the fish paste product of the present invention when it is kneaded with salt. Examples of such additives include starch such as corn starch, wheat flour and potato starch, various chemical and natural seasonings such as sodium glutamate, spices, flavoring agents, pigments, fats and oils, and plant proteins. These additives are appropriately selected depending on the desired texture and
characteristics.

### Functions

The fibrous food processing technology using the protein denaturant has been applied to the PW surimi (without adding any inhibitors) in the present invention. Consequently, the PW surimi, which has been considered to be impossible to use for fish paste product unless a protease inhibitor is used, was capable of being gelled, or being processed into fish paste products.

The present invention will be described in detail hereinafter. However, the present invention is by no means restricted to these examples.

### Example 1

### <Effect of immersion in protein denaturant solution and heating on protease>

The following tests were performed in order to confirm how the processes of denaturing and coagulating a protein with a protein denaturant solution (an acetate buffer solution at a pH of about 4.0) affect a protease having an optimum pH of about 4.0. As shown in Table 1, the product of the present invention was manufactured using the PW surimi as a material by changing the conditions such as the heating temperature, heating time and immersion time in the coagulant solution. The production process comprises kneading the surimi with salt, extruding into an aqueous protein denaturant solution, immersing, heating, neutralizing and washing with water in this order. Blend composition of the starting materials is shown in Table 2.

**TABLE 1**

| | | Immersion Time in Protein Denaturant Solution (min.) | Heating Time | Results of Evaluation |
|---|---|---|---|---|
| (1) | Steam, | 3 | 3 | Fibrous Texture, Good |
| | 95°C | 3 | 5 | Fibrous Texture, Good |
| | | 3 | 10 | Fibrous Texture, Good |
| | | 4 | 3 | Fibrous Texture, Good |
| | | 4 | 5 | Fibrous Texture, Good |
| | | 4 | 10 | Fibrous Texture, Good |
| | | 5 | 3 | Fibrous Texture, Good |
| | | 5 | 5 | Fibrous Texture, Good |
| | | 5 | 10 | Fibrous Texture, Good |
| (2) | Boil, | 3 | 3 | Fibrous Texture, Good |
| | 95°C | 3 | 5 | Fibrous Texture, Good |
| | | 3 | 10 | Fibrous Texture, Good |
| (3) | Boil | 3 | 3 | Fibrous Texture, but Soft and Readily Collapsed |
| | 60°C | | | |
| | | 3 | 5 | Viscous, No Fibrous Texture |
| | | 3 | 10 | No Fibrous Texture, mussy, Resembles Ground Meat |

**TABLE 2**

| | |
|---|---|
| Surimi | 49.70% |
| Common salt | 1.90% |
| Potato Starch | 9.00% |
| Water | 39.40% |

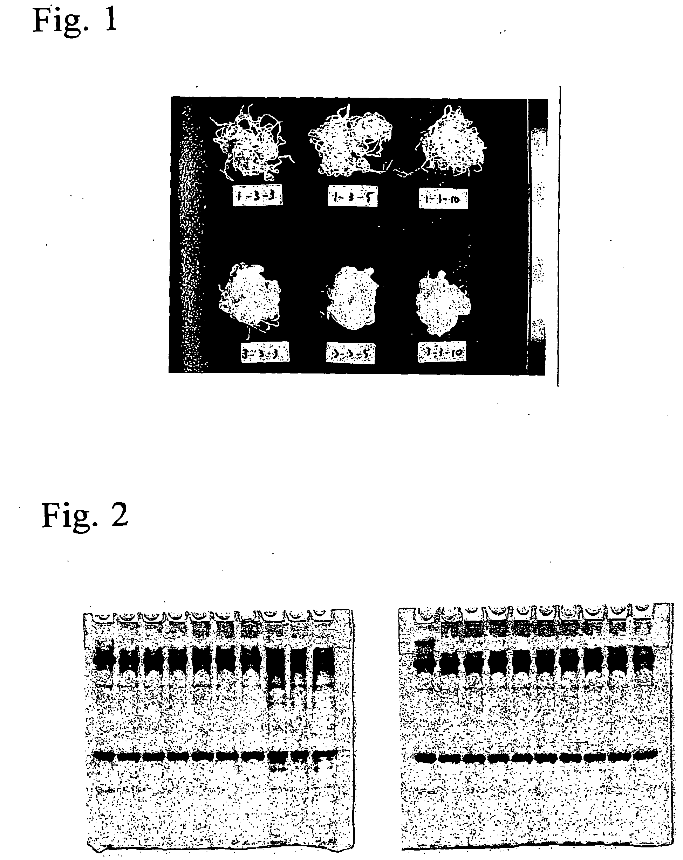

The results of the evaluation are shown in Table 1, and a photograph of each sample is shown in Fig. 1. In Fig. 1, the photographs of the products of the present invention produced by heating at 95°C for 3, 5 and 10 minutes, respectively, with steam (after immersing in the protein denaturant solution for 3 minutes) are shown in the upper row from the left to the right, while the photographs of the comparative products produced by heating at 60°C for 3, 5 and 10 minutes, respectively, by boiling are shown in the lower row from the left to the right. While products having good qualities (elasticity) were produced by heating at 90°C with steam or by boiling, only mussy products were obtained by heating at 60°C by boiling.

Fig. 2 shows electrophoresis diagrams showing the protease activities of the products in the examples of the present invention and of the comparative products. The lanes (1) to (20) represent the electrophoresis patterns of the following samples: (1) PW surimi ; (2) after 3 minutes' immersion and steam heating at 95°C for 3 minutes; (3) after 3 minutes' immersion and steam heating at 95°C for 5 minutes; (4) after 3 minutes' immersion and steam heating at 95°C for 10 minutes; (5) after 3 minutes' immersion and heating at 95°C for 3 minutes by boiling; (6) after 3 minutes' immersion and heating at 95°C for 5 minutes by boiling; (7) after 3 minutes' immersion and heating at 95°C for 10 minutes by boiling; (8) after 3 minutes' immersion and heating at 60°C for 3 minutes by boiling; (9) after 3 minutes' immersion and heating at 60°C for 5 minutes by boiling; (10) after 3 minutes' immersion and heating at 60°C for 10 minutes by boiling; (11) PW surimi ; (12) after 3 minutes' immersion and steam heating at 95°C for 3 minutes; (13) after 3 minutes' immersion and steam heating at 95°C for 5 minutes; (14) after 3 minutes' immersion and steam heating at 95°C for 10 minutes; (15) after 4 minutes' immersion and steam heating at 95°C for 3 minutes; (16) after 4 minutes' immersion and steam heating at 95°C for 5 minutes; (17) after 4 minutes' immersion and steam heating at 95°C for 10 minutes; (18) after 5 minutes' immersion and steam heating at 95°C for 3 minutes; (19) after 5 minutes' immersion and steam heating at 95°C for 5 minutes; (20) after 5 minutes' immersion and steam heating at 95°C for 10 minutes.

Since a decrease in myosin heavy chains was confirmed by electrophoresis in the samples heated at 60°C shown in lanes (8) to (10), this phenomenon is considered to be caused by the protease (Fig. 2). Not such large differences were observed due to the difference in the immersion time upto 5 minutes in the samples heated at 95°C by steam or boiling. No difference in the amount of myosin heavy chains depending on the immersion time in the coagulant solution was also observed.

Accordingly, it was shown that the protease inhibitor-free fish paste product can be produced using the PW surimi as the starting material, by immersing the material in the protein denaturant solution for 3 minutes followed by steam heating at 90°C for 10 minutes.

### Example 2

### <Confirmation of protease activity>

A gelled product was produced as in Example 1 by immersing the fish paste in the protein denaturant solution for 3 minutes and by steam-heating at 95°C for 10 minutes. The product was sampled (1) immediately before the steam treatment, (2) immediately after the steam treatment (before neutralization and (3) after neutralization, and the protease activity of each sample was measured by incubating at 60°C for 15 minutes.

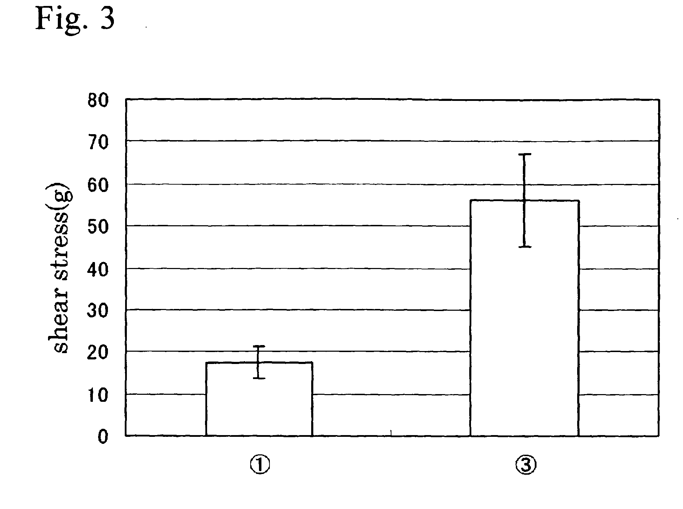

The results of organoleptic evaluation showed that, while no substantial changes in the properties were observed at times (2) and (3), the texture of the product became soft at time (1). The shear stresses of the samples at times (1) and (3) are shown in Fig. 3. The shear stress is lower at time (1) immediately before the steam treatment (17.46 ± 3.95), while the shear stress is higher (56.21 ± 11.01) at time (3) after heating and neutralization, and a clear difference between them was confirmed. These results suggest that, although the protease activity remains before (1) the steam treatment, the activity has been eliminated after treatments (2) and (3).

### Example 3

### <The effect of the diameter and shape of the filaments extruded into the protein denaturant solution>

Three types of nozzles were investigated. The nozzles used were for producing a slender and cylindrical product having a diameter of 1 mm, a medium-size product resembling Chinese noodles with a width of about 2 mm and a thickness of about 1 mm, and a large size product resembling flat noodles with a width of about 3 mm and a thickness of about 1 mm. The shear stresses of the fish paste products produced using these three types of nozzles were measured using a spring balance. A piano wire (0.3 mm in diameter) was attached at the tip of the spring balance, and the maximum load (the scale of the balance when the sample is cut-off) was used as the shear stress of the product of the present invention.

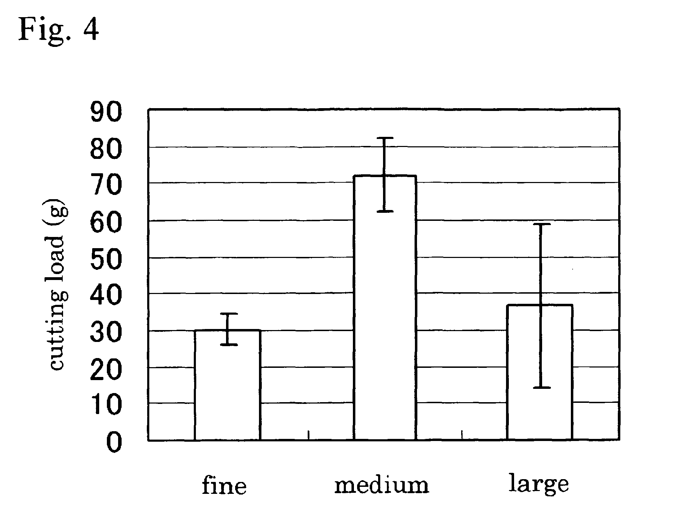

The results of the products of the present invention produced by the same method as in Example 1 are shown in Fig. 4. The products produced by using the slender type, medium type and large type nozzles showed shear stresses of 30.13 ± 4.29, 72.13 ± 9.93 and 36.53 ± 22.48, respectively. While some irregularities were observed in the data obtained using any type of nozzle, the cause of the irregularities is conjectured to be the result of the roughness on the surface of the NSP filament affecting the physical properties of the product. While the product obtained using the large type nozzle showed substantially larger irregularity in the data, this may be conjectured to be because the physical properties are more liable to be affected by the surface roughness due to a balance between the width and thickness (since the product resembles flat noodles).

### Industrial Applicability

Although PW surimi was thought to be impossible to use as a material of fish paste products unless a protease inhibitor is used, the present invention has enabled a gelled fish paste product using such a fish meat material to be produced without using any protease inhibitors.

## Claims

1. A protease inhibitor-free fish paste product obtainable by kneading a fish meat material having a high protease activity in the muscle due to parasites in the muscle with salt, extruding the salt-fish paste into a protein denaturant solution at a temperature not higher than a protease activating temperature to form filaments, and coagulating the filaments by heating.

2. The fish paste product according to claim 1, wherein the parasites are sporozoans.

3. The fish paste product according to claim 1 or 2, wherein the fish meat material is obtained from Pacific whiting and/or Merluccius gayi.

4. The fish paste product according to any one of claims 1 to 3 using fish paste derived from the fish meat surimi.

5. The fish paste product according to claim 1 obtainable by kneading the fish meat material with salt, extruding the salt-kneaded fish meat into a protein denaturant solution at a low temperature through a nozzle having a size with a pore diameter of 1 mm or less or a thickness of 1 mm or less to form filaments, and coagulating the filaments by heating.

6. The fish meat product according to any of the preceding claims, wherein the protein denaturant is an organic acid or an inorganic acid, and/or a high concentration solution of common salt.

7. Method for producing a protease inhibitor-free fish paste product comprising the steps of: kneading a fish meat material having a high protease activity in the muscle due to parasites in the muscle with salt, extruding the salt-fish paste into a protein denaturant solution at a temperature not higher than a protease activating temperature to form filaments, and coagulating the filaments by heating.

8. The method according to claim 7, wherein the salt-kneaded fish meat is extruded into a protein denaturant solution at a low temperature through a nozzle having a size with a pore diameter of 1 mm or less or a thickness of 1 mm or less to form filaments, and coagulating the filaments by heating.

9. The method according to claim 7 or 8, wherein the protein denaturant is an organic acid or an inorganic acid, and/or a high concentration solution of common salt.

## Patentansprüche

1. Proteaseinhibitor-freies Fischpastenprodukt, erhältlich durch Kneten eines Fischfleisch-Materials mit einer hohen Proteaseaktivität im Muskel infolge von Parasiten im Muskel mit Salz, Extrudieren der Salz-Fischpaste in eine Protein-Denaturierungslösung bei einer Temperatur, die nicht höher als eine Protease-Aktivierungstemperatur ist, um Filamente zu bilden, und Koagulieren der Filamente durch Erwärmen.

2. Fischpastenprodukt nach Anspruch 1, wobei die Parasiten Sporentierchen sind.

3. Fischpastenprodukt nach Anspruch 1 oder 2, wobei das Fischfleischmaterial vom Pazifik-Weißling und/oder Merluccius gayi erhalten wird.

4. Fischpastenprodukt nach einem der Ansprüche 1 bis 3 unter Verwendung einer Fischpaste, die vom Fischfleisch Surimi abgeleitet ist.

5. Fischpastenprodukt nach Anspruch 1, erhältlich durch Kneten des Fischfleisch-Materials mit Salz, Extrudieren des Salz-gekneteten Fischfleisches in eine Protein-Denaturierungslösung bei einer geringen Temperatur über eine Düse mit einer Größe mit einem Porendurchmesser von 1 mm oder weniger, oder einer Dicke von 1 mm oder weniger, um Filamente zu bilden, um Koagulieren der Filamente durch Erwärmen.

6. Fischfleischprodukt nach einem der vorangehenden Ansprüche, wobei das Protein-Denaturierungsmittel eine organische Säure oder eine anorganische Säure ist, und/oder eine Lösung eines gewöhnlichen Salzes von hoher Konzentration.

7. Verfahren um Herstellen eines Proteaseinhibitor-freien Fischpastenproduktes, umfassend die Schritte: Kneten eines Fischfleischmaterials mit einer hohen Proteaseaktivität im Muskel infolge von Parasiten im Muskel mit Salz, Extrudieren der Salz-Fischpaste in eine Protein-Denaturierungslösung bei einer Temperatur, die nicht höher als eine Protease-Aktivierungstemperatur ist, um Filamente zu bilden, und Koagulieren der Filamente durch Erwärmen.

8. Verfahren nach Anspruch 7, wobei das Salz-geknetete Fischfleisch extrudiert wird in eine Protein-Denaturierungslösung bei einer geringen Temperatur über eine Düse mit einer Größe mit einem Porendurchmesser von 1 mm oder weniger, oder einer Dicke von 1 mm oder weniger, um Filamente zu bilden, und Koagulieren der Filamente durch Erwärmen.

9. Verfahren nach Anspruch 7 oder 8, wobei das Protein-Denaturierungsmittel eine organisch Säure oder eine anorganische Säure ist, und/oder eine Lösung eines gewöhnlichen Salzes von hoher Konzentration.

## Revendications

1. Produit à base de poisson en pâte sans inhibiteur de protéase susceptible d'être obtenu par pétrissage avec du sel d'un matériau de chair de poisson ayant une activité protéase élevée dans le tissu musculaire en raison de parasites dans le tissu musculaire, extrusion de la pâte de poisson salée dans une solution dénaturante de protéine à une température non supérieure à une température d'activation des protéases pour former des filaments, et coagulation des filaments par chauffage.

2. Produit à base de poisson en pâte selon la revendication 1, dans lequel les parasites sont des sporozoaires.

3. Produit à base de poisson en pâte selon la revendication 1 ou 2, dans lequel le matériau de chair de poisson est obtenu à partir de merlan du Pacifique et/ou de *Merluccius gayi.*

4. Produit à base de poisson en pâte selon l'une quelconque des revendications 1 à 3, utilisant une pâte de poisson dérivée de la chair de poisson surimi.

5. Produit à base de poisson en pâte selon la revendication 1 susceptible d'être obtenu par pétrissage du matériau de chair de poisson avec du sel, extrusion de la chair de poisson pétrie salée dans une solution dénaturante de protéine à une température basse à travers une buse ayant une taille avec un diamètre de pore de 1 mm ou moins ou une épaisseur de 1 mm ou moins pour former des filaments, et coagulation des filaments par chauffage.

6. Produit à base de chair de poisson selon l'une quelconque des revendications précédentes, dans lequel le dénaturant de protéine est un acide organique ou un acide inorganique, et/ou une solution à concentration élevée de sel courant.

7. Procédé destiné à produire un produit à base de poisson en pâte sans inhibiteur de protéase comprenant les étapes de : pétrissage avec du sel d'un matériau en chair de poisson ayant une activité protéase élevée dans le tissu musculaire en raison de parasites dans le tissu musculaire, extrusion de la pâte de poisson salée dans une solution dénaturante de protéine à une température non supérieure à une température d'activation des protéases pour former des filaments, et coagulation des filaments par chauffage.

8. Procédé selon la revendication 7, dans lequel la chair de poisson malaxée salée est extrudée dans une solution dénaturante de protéine à une température basse à travers une buse ayant une taille avec un diamètre de pore de 1 mm ou moins, ou une épaisseur de 1 mm ou moins pour former des filaments, et coagulation des filaments par chauffage.

9. Procédé selon la revendication 7 ou 8, dans lequel le dénaturant de protéine est un acide organique ou un acide inorganique, et/ou une solution à concentration élevée de sel courant.
